# EUROPEAN PATENT APPLICATION

(11) **EP 4 745 663 A1**
(43) Date of publication of application: **20.05.2026**
(21) Application number: 24839500.6
(22) Date of filing: 24.06.2024
(51) Int. Cl.: G03B 5/00, G02B 7/04, G03B 17/14, H02K 33/18, H04N 23/50, H04N 23/68

(54) **INTERCHANGEABLE LENS AND IMAGING DEVICE**

(30) Priority: 12.07.2023 JP 2023114453
(71) Applicant: Sony Group Corporation, Tokyo 108-0075 (JP)
(72) Inventor: TANAKA, Tetsu, Tokyo 108-0075 (JP)
(74) Representative: 2SPL Patentanwälte PartG mbB
(86) International application number: PCT/JP2024/022844
(87) International publication number: WO 2025/013607

(57) **Abstract**

In an interchangeable lens, each of drive magnets includes a first pole portion and a second pole portion, outer yokes are each provided with a first mounting portion and a second mounting portion positioned in a state of facing each other, a pair of drive magnets and an inner yoke are positioned between a corresponding one of the first mounting portions and the second mounting portion in a state where the pair of drive magnets and the inner yoke are inserted into an air core coil, the pair of drive magnets have the first pole portions respectively mounted on opposite surfaces of the inner yoke and the second pole portions each mounted on a corresponding one of the first mounting portion and the second mounting portion, an axial direction of the air core coil in an actuator that applies a moving force in a first direction coincides with the first direction, and an axial direction of the air core coil in an actuator that applies a moving force in a second direction coincides with the second direction.

## Description

### TECHNICAL FIELD

The present technology relates to a technical field of an interchangeable lens and an imaging device having a configuration in which a movable body is movable in directions orthogonal to an optical axis direction with respect to a fixed body.

### BACKGROUND ART

Some of imaging devices such as video cameras and still cameras and interchangeable lenses, which are attachable to and detachable from imaging devices, have a shake correction mechanism that corrects camera shake by moving the lens in directions orthogonal to the optical axis direction, thereby improving image quality.

Some of such interchangeable lenses and imaging devices each include, for example, a shake correction mechanism in which a movable body having a lens is movable in a first direction orthogonal to an optical axis direction and a second direction orthogonal to both the optical axis direction and the first direction (see, for example, Patent Document 1 and Patent Document 2).

The imaging devices described in Patent Document 1 and Patent Document 2 are provided with two actuators each including a drive magnet, an air core coil, and a yoke. The air core coils are attached to a movable body, and the drive magnets are attached to a fixed body. The movable body is moved in the first direction together with the air core coil of one actuator by the driving force of the one actuator, and the movable body is moved in the second direction together with the air core coil of the other actuator by the driving force of the other actuator.

### CITATION LIST

### PATENT DOCUMENT

Patent Document 1: Japanese Patent Application Laid-Open No. 2011-13614
Patent Document 2: Japanese Patent Application Laid-Open No. 2020-101783

### SUMMARY OF THE INVENTION

### PROBLEMS TO BE SOLVED BY THE INVENTION

In a configuration in which actuators each including a drive magnet and an air core coil are used as in the shake correction mechanism of the interchangeable lens or the imaging device described in Patent Document 1 and Patent Document 2, each air core coil is moved with respect to the drive magnet at the time of shake correction. Therefore, if the magnetic flux density for the air core coil is greatly changed depending on the moving position of the air core coil, there is a possibility that the driving force decreases that depends on the moving position of the air core coil.

Therefore, the actuators may need to increase in size in order to prevent the decrease in the driving force, but in this case, the interchangeable lens and the imaging device are increased in size.

In particular, in a type in which a pair of drive magnets is positioned side by side in the moving direction of each air core coil as in the actuator described in Patent Document 2, if the air core coil is moved and a part thereof is positioned outside the drive magnet, the magnetic flux density for the air core coil greatly decreases, and the driving force of the actuator is likely to decrease.

Therefore, an object of an interchangeable lens and an imaging device of the present technology is to achieve downsizing while preventing decrease in a driving force of an actuator at a time of shake correction.

### SOLUTIONS TO PROBLEMS

An interchangeable lens according to the present technology includes: a fixed body fixed inside an outer cylinder; a movable body including a holding frame that holds a lens, the movable body being moved with respect to the fixed body in a first direction and a second direction each orthogonal to an optical axis direction; and two actuators that each apply a moving force in a corresponding one of the first direction and the second direction, in which each of the actuators includes an air core coil mounted on the movable body, an outer yoke mounted on the fixed body, a pair of drive magnets, and an inner yoke on which the pair of drive magnets is mounted, each of the drive magnets includes a first pole portion and a second pole portion, the outer yoke is provided with a first mounting portion and a second mounting portion positioned in a state of facing each other, the pair of drive magnets and the inner yoke are positioned between the first mounting portion and the second mounting portion in a state where the pair of drive magnets and the inner yoke are inserted into the air core coil, in the pair of drive magnets, the first pole portions are respectively mounted on opposite surfaces of the inner yoke, and the second pole portions are each mounted on a corresponding one of the first mounting portion and the second mounting portion, an axial direction of the air core coil in an actuator that applies a moving force in the first direction coincides with the first direction, and an axial direction of the air core coil in an actuator that applies a moving force in the second direction coincides with the second direction.

Therefore, each air core coil is moved in the axial direction with respect to the pair of drive magnets in which the first pole portions are respectively mounted on opposite surfaces of the inner yoke and the second pole portions are each mounted on a corresponding one of the first mounting portion and the second mounting portion, so that shake correction is performed.

An imaging device according to the present technology includes: a fixed body fixed inside a device main body including an imaging element that converts a captured optical image into an electrical signal; a movable body including a holding frame that holds a lens, the movable body being moved with respect to the fixed body in a first direction and a second direction each orthogonal to an optical axis direction; and two actuators that each apply a moving force in a corresponding one of the first direction and the second direction, in which each of the actuators includes an air core coil mounted on the movable body, an outer yoke mounted on the fixed body, a pair of drive magnets, and an inner yoke on which the pair of drive magnets is mounted, each of the drive magnets includes a first pole portion and a second pole portion, the outer yoke is provided with a first mounting portion and a second mounting portion positioned in a state of facing each other, the pair of drive magnets and the inner yoke are positioned between the first mounting portion and the second mounting portion in a state where the pair of drive magnets and the inner yoke are inserted into the air core coil, in the pair of drive magnets, the first pole portions are respectively mounted on opposite surfaces of the inner yoke, and the second pole portions are each mounted on a corresponding one of the first mounting portion and the second mounting portion, an axial direction of the air core coil in an actuator that applies a moving force in the first direction coincides with the first direction, and an axial direction of the air core coil in an actuator that applies a moving force in the second direction coincides with the second direction.

Therefore, each air core coil is moved in the axial direction with respect to the pair of drive magnets in which the first pole portions are respectively mounted on opposite surfaces of the inner yoke and the second pole portions are each mounted on a corresponding one of the first mounting portion and the second mounting portion, so that shake correction is performed.

### BRIEF DESCRIPTION OF DRAWINGS

Fig. 1 illustrates an interchangeable lens and an imaging device of the present technology together with Figs. 2 to 23, and this figure is a perspective view of the imaging device.
Fig. 2 is a perspective view of a shake correction mechanism.
Fig. 3 is an exploded perspective view of the shake correction mechanism.
Fig. 4 is a perspective view illustrating a movable body and the like in a state of being viewed from a direction different from that in Fig. 2.
Fig. 5 is a perspective view illustrating a movable body and the like in a state where a counter yoke is removed.
Fig. 6 is a perspective view illustrating a first actuator in a state where the counter yoke is separated.
Fig. 7 is a cross-sectional view of the first actuator.
Fig. 8 is a perspective view illustrating a second actuator in a state where the counter yoke is separated.
Fig. 9 is a cross-sectional view of the second actuator.
Fig. 10 is a cross-sectional view illustrating drive magnets, an air core coil, and an inner yoke of the first actuator.
Fig. 11 is a cross-sectional view illustrating drive magnets, an air core coil, and an inner yoke of the second actuator.
Fig. 12 is a conceptual diagram illustrating a state of a magnetic flux generated in the first actuator.
Fig. 13 is a conceptual diagram illustrating a state of a magnetic flux generated in a second actuator.
Fig. 14 is a graph illustrating measurement data of driving force (thrust) generated in an actuator.
Fig. 15 illustrates measurement data of attractive force of drive magnets to magnetic plates together with Fig. 16, and this figure is a graph illustrating a relationship of distances between the magnetic plates to the attractive forces of the drive magnets.
Fig. 16 is a graph illustrating a relationship of areas of the magnetic plates to the attractive forces of the drive magnets. Fig. 17 illustrates an actuator according to a modified example together with Figs. 18 to 21, and this figure is an exploded perspective view thereof.
Fig. 18 is a perspective view thereof.
Fig. 19 is a bottom view thereof.
Fig. 20 is a cross-sectional view thereof.
Fig. 21 is a perspective view illustrating a case where the actuator is used as a second actuator.
Fig. 22 is a graph illustrating measurement data of driving force (thrust) for the actuator according to the modified example.
Fig. 23 is a block diagram of the imaging device.

### MODE FOR CARRYING OUT THE INVENTION

Hereinafter, modes for carrying out an interchangeable lens and an imaging device according to the present technology will be described with reference to the accompanying drawings.

In modes for carrying out the invention to be described below, the imaging device of the present technology is applied to a still camera, and the interchangeable lens of the present technology is applied to an interchangeable lens attachable to and detachable from a still camera.

Note that an application range of each of the imaging device and the interchangeable lens of the present technology is not limited to the still camera and the interchangeable lens attachable to and detachable from the still camera. The imaging device and the interchangeable lens of the present technology can be widely applied to, for example, various imaging devices such as a video camera, or interchangeable lenses attachable to and detachable from these imaging devices.

In the following description, it is assumed that front-rear, upper-lower, and left-right directions are indicated as directions viewed from a photographer at the time of imaging with the still camera. Accordingly, a subject side is the front side, and a photographer side is the rear side. Accordingly, the object side (subject side) is the front side, and the image plane side (photographer side) is the rear side.

Note that the front-rear, upper-lower, and left-right directions described below are used for ease of description, and embodiments of the present technology are not limited by these directions.

Furthermore, the following lenses include both a lens constituted by a single lens and a lens group constituted by a plurality of lenses.

### (Overall Configuration of Imaging Device)

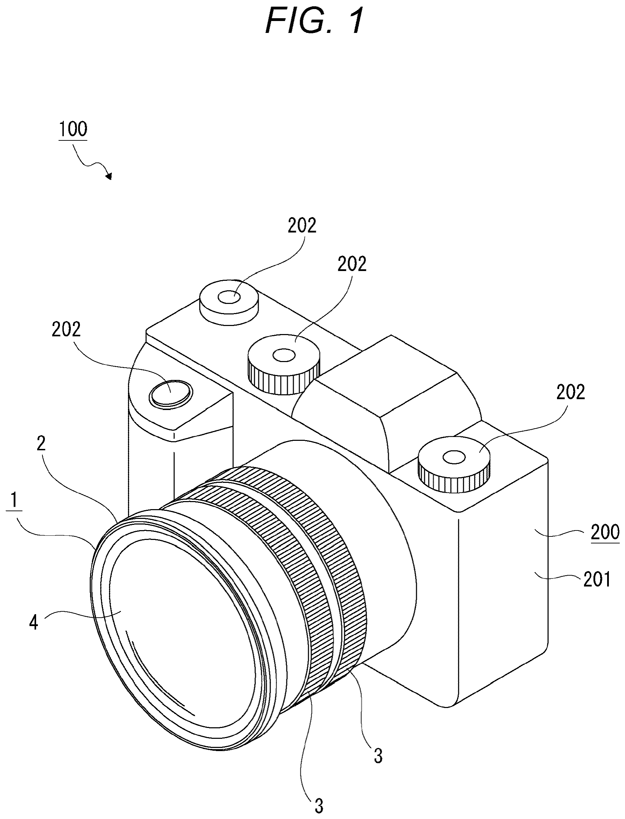

An imaging device 100 includes a device main body 200, and has an interchangeable lens 1 attachable to and detachable from the imaging device 100 (see Fig. 1). However, the imaging device 100 may have a so-called retractable configuration in which the lens barrel is taken in and out, for example.

The device main body 200 is formed by arranging required units inside and outside an outer casing 201.

In the outer casing 201, various multiple operation units 202 are arranged on an upper surface and a rear surface, for example. For example, a power button, a shutter button, a zoom knob, a mode switching knob, and the like are provided as the operation units 202.

A display (display unit) (not illustrated) is arranged on the rear surface of the outer casing 201. The outer casing 201 has a circular opening (not illustrated) in its front surface, and the portion around the opening is provided as a mount portion for mounting the interchangeable lens 1. An imaging element (not illustrated) such as a charge coupled device (CCD) or a complementary metal-oxide semiconductor (CMOS) is arranged inside the outer casing 201, and the imaging element is positioned behind the opening.

### <Configuration of Interchangeable Lens>

The interchangeable lens 1 is for an interchangeable lens digital camera, for example.

The interchangeable lens 1 includes an outer cylinder 2, and the outer cylinder 2 is provided with at least one operation ring 3 for focusing and zooming. The operation ring 3 is rotationally operated, and thereby manual focusing and manual zooming are performed.

In a rear end portion of the outer cylinder 2, there is provided a lens mount (not illustrated) bayonet-coupled to the mount portion of the device main body 200, for example. An imaging lens 4 is mounted on a front end portion of the outer cylinder 2.

Note that the configuration of the interchangeable lens 1 is not limited to the above configuration, and may be, for example, a type having a configuration such that a plurality of outer cylinders is provided and one outer cylinder is pushed in and pulled out with respect to other outer cylinders to change the overall length.

Inside the interchangeable lens 1, a plurality of lenses (not illustrated) are spaced apart from each other in the optical axis direction (front-rear direction), and these lenses include a movable lens (movable lens group) movable in the optical axis direction and a fixed lens (fixed lens group) immovable in the optical axis direction.

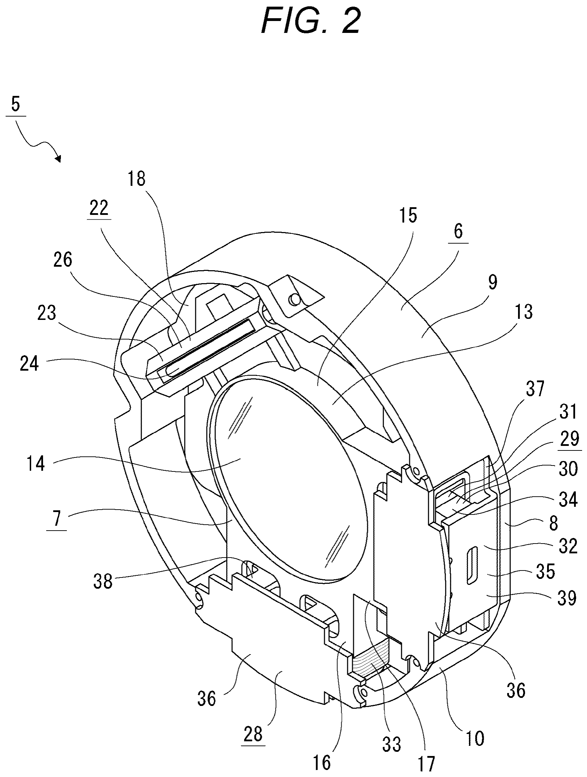

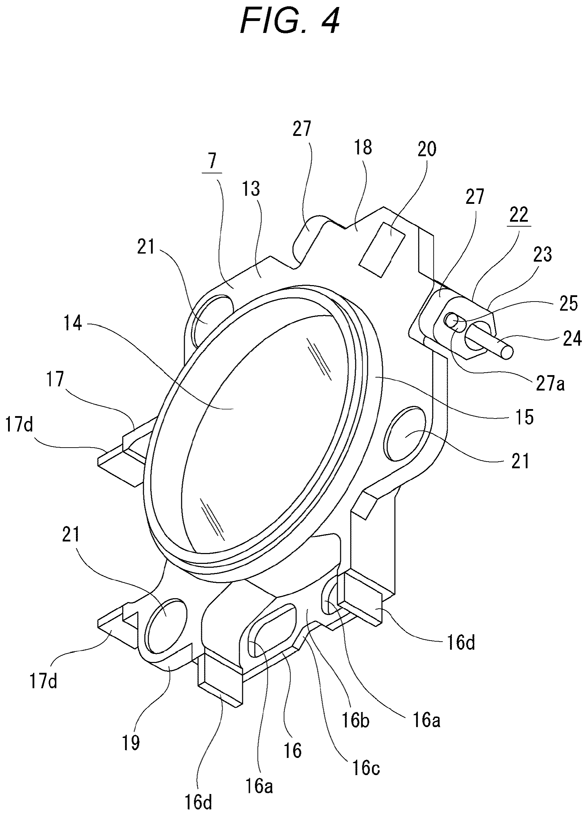

A shake correction mechanism 5 for correcting camera shake is arranged inside the interchangeable lens 1 (see Figs. 2 to 4). The shake correction mechanism 5 includes a fixed body 6 and a movable body 7. The shake correction mechanism 5 has a function of correcting camera shake by moving the movable body 7 with respect to the fixed body 6 in a first direction and a second direction each orthogonal to the optical axis direction.

The fixed body 6 is arranged in a fixed state inside the outer cylinder 2. The fixed body 6 has a substantially circular outer shape and includes a non-magnetic material such as a resin material. The fixed body 6 includes a base surface portion 8 formed in a plate-like annular shape facing the front-rear direction, and a first peripheral surface portion 9 and a second peripheral surface portion 10 each protruding forward from a portion excluding part of the outer peripheral portion of the base surface portion 8. A space inside the base surface portion 8 is formed as a light transmission hole 8a. The first peripheral surface portion 9 protrudes forward from a substantially half of the portion of the outer peripheral portion of the base surface portion 8, and the second peripheral surface portion 10 is provided at equal intervals from opposite ends of the first peripheral surface portion 9 in the circumferential direction.

The base surface portion 8 includes mounting recesses 8b, one of which is opened forward in a lower end portion and the other of which is opened forward in one end portion on a lateral side. The mounting recesses 8b are each positioned between the first peripheral surface portion 9 and the second peripheral surface portion 10.

For example, three disk-shaped receiving plates 11 are separately mounted on the base surface portion 8 at equal intervals in the circumferential direction. Each receiving plate 11 has a front surface exposed forward. The urging plate metal 12 is mounted on the base surface portion 8 at a position between the two receiving plates 11. The front surface of the urging plate metal 12 is exposed forward.

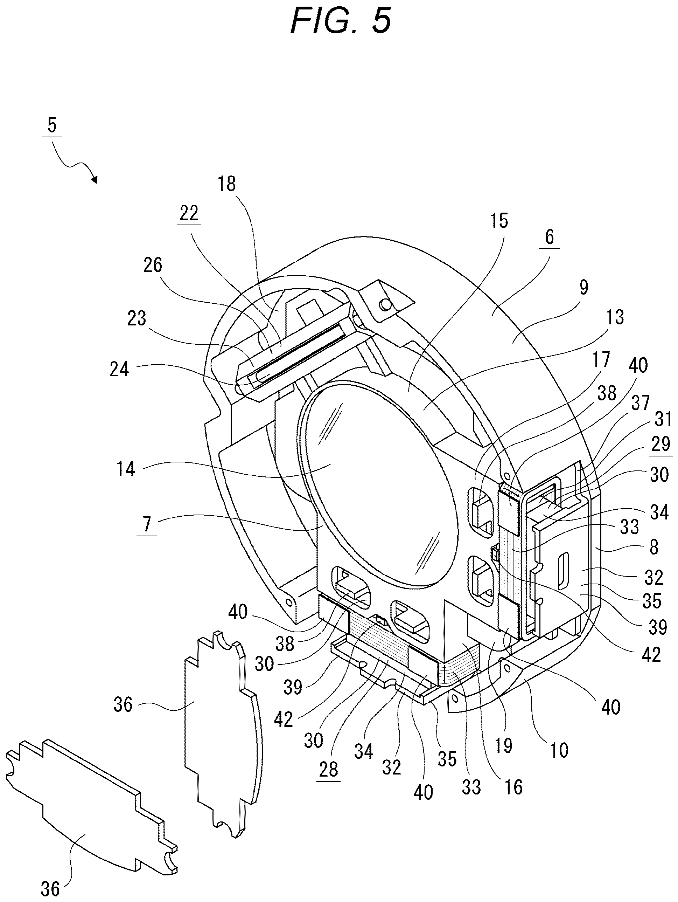

The movable body 7 is supported by the fixed body 6 so as to be movable in a first direction (up-down direction) and a second direction (left-right direction) each orthogonal to the optical axis direction, and includes a holding frame 13 and a lens 14 (see Figs. 2 to 5).

The holding frame 13 includes a non-magnetic material such as a resin material or the like, and includes a holding portion 15 having a substantially annular shape, a first mounting protrusion 16, a second mounting protrusion 17, a first projecting protrusion 18, and a second projecting protrusion 19, each of which projects from substantially annular-shaped holding portion 15. The lens 14 is held by the holding portion 15, and the thickness direction of the lens 14 is set to the optical axis direction (front-rear direction).

The first mounting protrusion 16 protrudes downward from the holding portion 15 and is formed in a horizontally long shape, and the second mounting protrusion 17 protrudes to one lateral side from the holding portion 15 and is formed in a vertically long shape. The protruding direction of the first projecting protrusion 18 from the holding portion 15 is in a range from the upper side to the other lateral side. The second projecting protrusion 19 is positioned between the first mounting protrusion 16 and the second mounting protrusion 17.

The first mounting protrusion 16 has two escape holes 16a formed so as to be spaced apart from each other in the left-right direction. A portion between the two escape holes 16a in the first mounting protrusion 16 is provided as an insertion portion 16b. The first mounting protrusion 16 has an arrangement recess 16c opened downward formed at its central portion of the distal end portion in the left-right direction. The first mounting protrusion 16 has both left and right end portions each provided with a coil mounting protrusion 16d protruding downward.

The second mounting protrusion 17 has two escape holes 17a formed so as to be spaced apart from each other in the up-down direction. A portion between the two escape holes 17a in the second mounting protrusion 17 is provided as an insertion portion 17b. The second mounting protrusion 17 has an arrangement recess 17c opened to the lateral side, formed at its central portion of the distal end portion in the up-down direction. The second mounting protrusion 17 has both upper and lower end portions each provided with a coil mounting protrusions 17d protruding laterally.

The first projecting protrusion 18 has an attracting magnet 20 mounted on its rear surface at the central portion in the circumferential direction. The first projecting protrusion 18 and the second projecting protrusion 19 each have one or more pressing plates 21 mounted thereon. Each pressing plate 21 is formed in, for example, a disk shape, and has a rear surface exposed rearward. The first projecting protrusion 18 has pressing plates 21 each mounted on its opposite end portions in the circumferential direction, and the second projecting protrusion 19 has a pressing plate 21 mounted thereon. Therefore, the movable body 7 has three pressing plates 21 mounted thereon, and the three pressing plates 21 are respectively positioned to face the receiving plates 11 mounted on the fixed body 6.

The movable body 7 is supported by the fixed body 6 via a correction drive system 22 also called a compensator. The correction drive system 22 includes a support arm 23, a first shaft member 24, and a second shaft member 25.

The support arm 23 includes a connecting portion 26 extending in a predetermined direction, for example, a direction inclined by 45 degrees with respect to both the up-down direction and the left-right direction, and a pair of support portions 27 respectively protruding from opposite end portions in the longitudinal direction of the connecting portion 26, in the same direction orthogonal to the longitudinal direction (rearward). The support portions 27 each has a long hole-shaped shaft support hole 27a at its distal end portion. The shaft support hole 27a is formed in a shape elongated in the protruding direction of the support portion 27 with respect to the connecting portion 26.

The first shaft member 24 penetrates through the pair of support portions 27, and has its opposite end portions each fixed to the first peripheral surface portion 9 of the fixed body 6. The support arm 23 is slidable with respect to the first shaft member 24 in the axial direction of the first shaft member 24 and is pivotable about the first shaft member 24 as a fulcrum.

The second shaft member 25 is inserted into the shaft support holes 27a of the pair of support portions 27, and a portion between the shaft support holes 27a is fixed to the first projecting protrusion 18 of the movable body 7. The second shaft member 25 is positioned parallel to the first shaft member 24 and is movable in the longitudinal direction of the shaft support hole 27a.

In the imaging device 100, the movable body 7 is moved in the first direction (up-down direction) and the second direction (left-right direction), each orthogonal to the optical axis direction, with respect to the fixed body 6. However, since the correction drive system 22 as described above is provided and the first shaft member 24 and the second shaft member 25 are always held in parallel, the movable body 7 is not rotated with respect to the fixed body 6 in the roll direction in the plane orthogonal to the optical axis.

As described above, the movable body 7 is moved with respect to the fixed body 6 in the first direction and the second direction. The movement in the first direction is performed by the driving force of the first actuator 28, and the movement in the second direction is performed by the driving force of the second actuator 29.

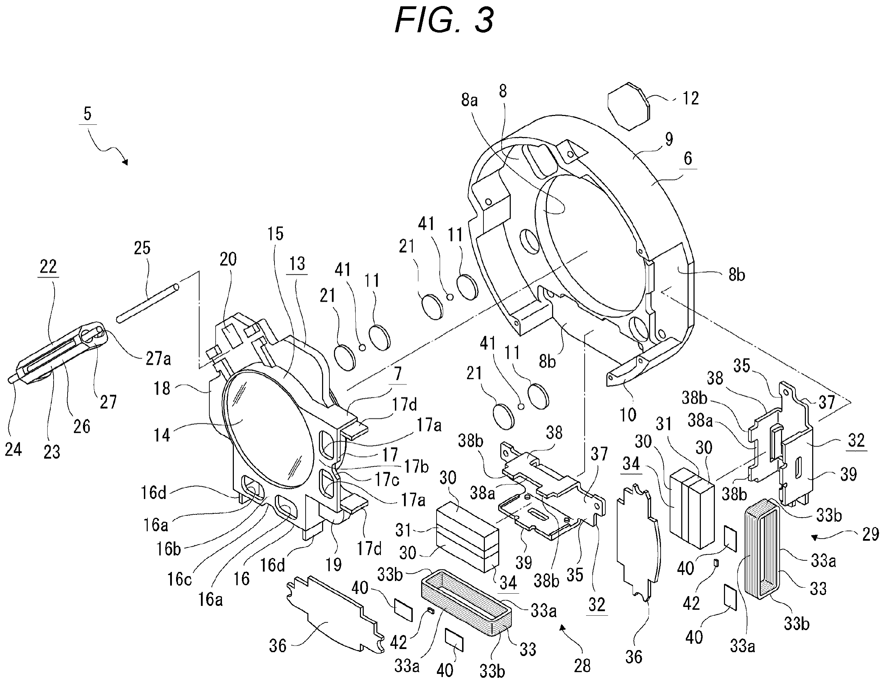

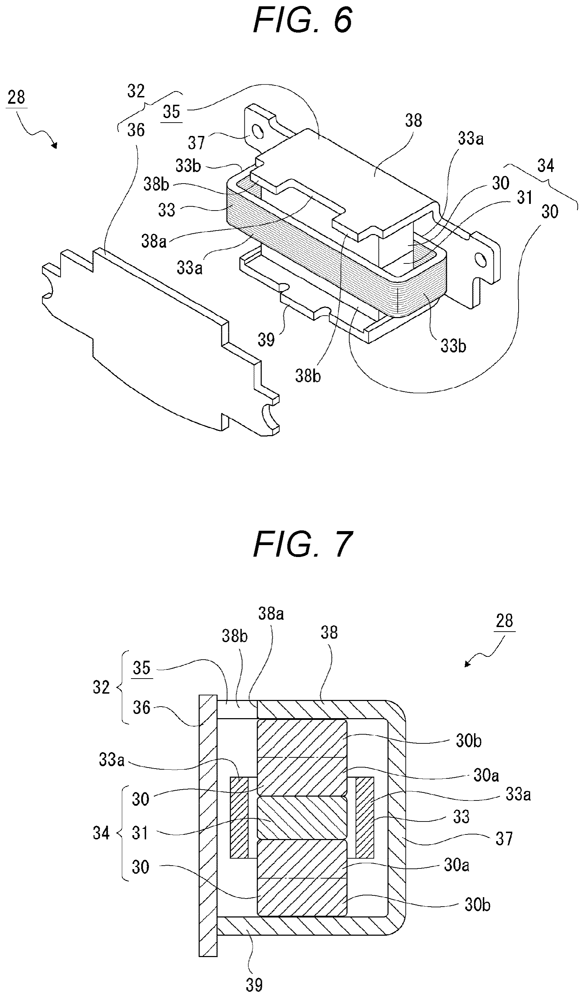

The first actuator 28 includes a pair of drive magnets 30, an inner yoke 31, an outer yoke 32, and an air core coil 33 (see Figs. 3, 6, and 7).

The pair of drive magnets 30 is spaced apart in the up-down direction and formed in, for example, a horizontally long rectangular parallelepiped shape. Each drive magnet 30 includes a first pole portion 30a and a second pole portion 30b magnetized in the up-down direction, and for example, the first pole portion 30a is magnetized as an N pole and the second pole portion 30b is magnetized as an S pole. The pair of drive magnets 30 are configured such that the same pole portions face each other in the up-down direction, and are positioned, for example, in a state where the first pole portions 30a face each other.

The inner yoke 31 is positioned between the pair of drive magnets 30, and includes a magnetic material such as a metal plate in a horizontally long rectangular parallelepiped shape, for example. A lower surface of upper drive magnet 30 and an upper surface of lower drive magnet 30 are fixed respectively to upper and lower surfaces of inner yoke 31 by, for example, adhesion or the like. Therefore, the pair of drive magnets 30 and the inner yoke 31 are coupled in the up-down direction to each other to form a magnet coupling body 34.

The outer yoke 32 is formed in a substantially rectangular tubular shape with a hole penetrating in the left-right direction, and is configured by mounting a counter yoke 36 to a bottom yoke 35. In outer yoke 32, both bottom yoke 35 and counter yoke 36 include a magnetic material such as a metal plate. Note that the outer yoke 32 may be configured only with the bottom yoke 35.

The bottom yoke 35 includes a horizontally long base portion 37 facing the front-rear direction, a first mounting portion 38 protruding forward from an upper end portion of the base portion 37, and a second mounting portion 39 protruding forward from a lower end portion of the base portion 37. The first mounting portion 38 and the second mounting portion 39 each protrude from a corresponding one of portions of the base portion 37 each excluding both left and right end portions. A cutout portion 38a is formed at a front end portion of the first mounting portion 38, and the cutout portion 38a is opened forward. Portions on both left and right sides of the cutout portion 38a in the first mounting portion 38 are respectively provided as insertion protrusions 38b protruding forward.

The first mounting portion 38 and the second mounting portion 39 respectively have the upper surface and lower surface of the magnet coupling body 34 attached thereon by, for example, adhesion or the like. Therefore, the upper surface of the upper drive magnet 30 is attached to the lower surface of the first mounting portion 38, and the lower surface of the lower drive magnet 30 is attached to the upper surface of the second mounting portion 39.

In a state where the magnet coupling body 34 is attached to the first mounting portion 38 and the second mounting portion 39, the counter yoke 36 is mounted on the bottom yoke 35. The counter yoke 36 is formed in a plate shape facing the front-rear direction, and has an upper end portion mounted on the front end portion of the first mounting portion 38 and a lower end portion mounted on the front end portion of the second mounting portion 39.

In a state where the magnet coupling body 34 is attached to the first mounting portion 38 and the second mounting portion 39, a gap is formed between the magnet coupling body 34 and the base portion 37, and a gap is formed between the magnet coupling body 34 and the counter yoke 36.

The outer yoke 32 is mounted on the base surface portion 8 of the fixed body 6 in a state where the base portion 37 is inserted into one of the mounting recesses 8b. Since the base portion 37 is inserted into the mounting recess 8b in this manner, the protrusion amount of the outer yoke 32 forward from the fixed body 6 is reduced, and the interchangeable lens 1 can be downsized.

The air core coil 33 is formed in a horizontally long substantially rectangular tubular shape, and the up-down direction is the axial direction. The air core coil 33 includes a pair of long portions 33a extending in the left-right direction and a pair of short portions 33b extending in the front-rear direction. The air core coil 33 is attached to the lower end portion of the first mounting protrusion 16 of the movable body 7 by, for example, adhesion or the like. Specifically, the two coil mounting protrusions 16d of the first mounting protrusion 16 are inserted into the air core coil 33, and the coil mounting protrusions 16d are respectively bonded to the short portions 33b, whereby the air core coil 33 is attached to the first mounting protrusion 16. The magnet coupling body 34 is inserted into the air core coil 33, and the air core coil 33 is movable in the up-down direction with respect to the magnet coupling body 34.

The front surface of the front long portion 33a of the air core coil 33 has both left and right end portions each having a magnetic plate 40 attached thereto by adhesion or the like, for example. Note that the interchangeable lens 1 may be configured such that a part of a flexible printed wiring board (not illustrated) is bonded to the long portion 33a on the front side of the air core coil 33, the magnetic plates 40 are attached to the flexible printed wiring board, and thereby the magnetic plates 40 are attached to the air core coil 33 via the flexible printed wiring board. Furthermore, for example, one of the magnetic plates 40 may be attached to a central portion of the front long portion 33a in the left-right direction.

In the interchangeable lens 1, in a state where the magnet coupling body 34 is inserted into the air core coil 33 mounted on the first mounting protrusion 16, the magnet coupling body 34 is mounted on the outer yoke 32, and the counter yoke 36 is mounted on the bottom yoke 35. At this time, the insertion portion 16b of the first mounting protrusion 16 is inserted into the cutout portion 38a of the bottom yoke 35, and the insertion protrusions 38b are respectively inserted into the two escape holes 16a. Therefore, when the movable body 7 is moved in the first direction and the second direction, the first mounting protrusion 16 does not interfere with the outer yoke 32, and the movable body 7 is smoothly moved in the first direction and the second direction.

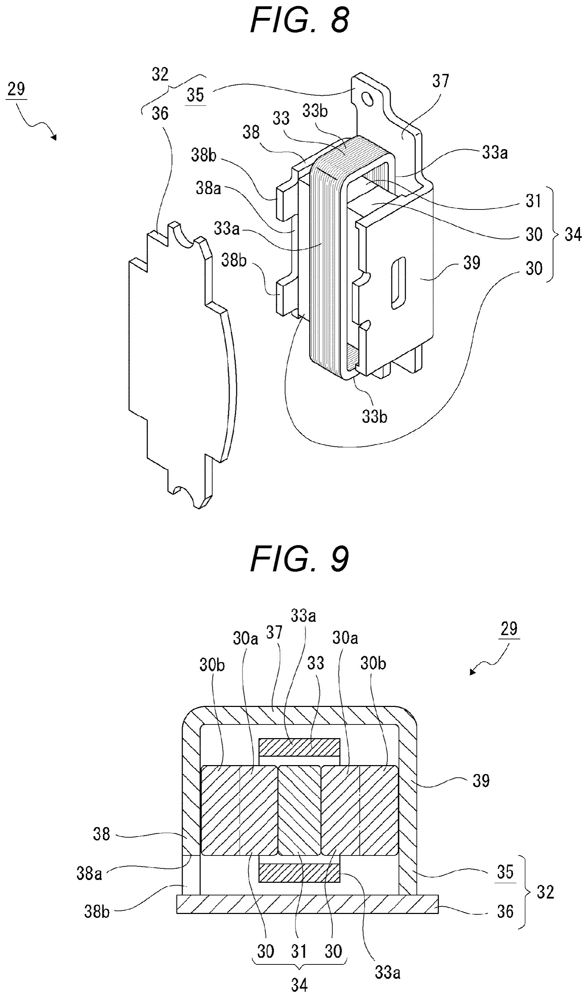

The second actuator 29 is configured similarly to the first actuator 28, and includes a pair of drive magnets 30, an inner yoke 31, an outer yoke 32, and an air core coil 33 (see Figs. 3, 8, and 9). Note that the second actuator 29 has a configuration similar to that of the first actuator 28. Only an orientation and the like of each unit is different from that of the first actuator 28. Therefore, the following description of the second actuator 29 will be simplified.

The pair of drive magnets 30 is spaced apart from each other in the left-right direction. The drive magnets 30 each include the first pole portion 30a and the second pole portion 30b magnetized in the left-right direction, and for example, the first pole portion 30a is magnetized as an N pole and the second pole portion 30b is magnetized as an S pole. The pair of drive magnets 30 is configured such that the same pole portions face each other in the left-right direction.

The inner yoke 31 is positioned between the pair of drive magnets 30, and is formed in, for example, a vertically long rectangular parallelepiped shape. The inner yoke 31 has both left and right surfaces each having a drive magnet 30 fixed thereon. Therefore, the pair of drive magnets 30 and the inner yoke 31 are coupled in the left-right direction to form a magnet coupling body 34.

The outer yoke 32 is formed in a substantially rectangular tubular shape with a hole penetrating in the up-down direction, and is configured by mounting a counter yoke 36 to a bottom yoke 35.

The bottom yoke 35 includes a vertically long base portion 37 facing the front-rear direction, a first mounting portion 38 protruding forward from one lateral portion of the base portion 37, and a second mounting portion 39 protruding forward from the other lateral portion of the base portion 37. The first mounting portion 38 and the second mounting portion 39 each protrude from a corresponding one of portions of the base portion 37 each excluding both upper and lower end portions. Portions on both upper and lower sides of the cutout portion 38a in the first mounting portion 38 are respectively provided as insertion protrusions 38b protruding forward.

The left surface and right surface of the magnet coupling body 34 are respectively attached to the first mounting portion 38 and the second mounting portion 39.

Both the left end and right ends of the counter yoke 36 are respectively mounted on the front end of first mounting portion 38 and the front end of second mounting portion 39.

In a state where the magnet coupling body 34 is attached to the first mounting portion 38 and the second mounting portion 39, a gap is formed between the magnet coupling body 34 and the base portion 37, and a gap is formed between the magnet coupling body 34 and the counter yoke 36.

The outer yoke 32 is mounted on the base surface portion 8 of the fixed body 6 in a state where the base portion 37 is inserted into the other of the mounting recesses 8b. Since the base portion 37 is inserted into the mounting recess 8b in this manner, the protrusion amount of the outer yoke 32 forward from the fixed body 6 is reduced, and the interchangeable lens 1 can be downsized.

The air core coil 33 is formed in a vertically long substantially rectangular tubular shape, and the left-right direction is the axial direction. The air core coil 33 includes a pair of long portions 33a extending in the up-down direction and a pair of short portions 33b extending in the front-rear direction. The air core coil 33 is attached to the distal end portion of the second mounting protrusion 17 in the movable body 7. Specifically, the two coil mounting protrusions 17d of the second mounting protrusion 17 are inserted into the air core coil 33, and the coil mounting protrusions 17d are respectively bonded to the short portions 33b, whereby the air core coil 33 is attached to the second mounting protrusion 17. The magnet coupling body 34 is inserted into the air core coil 33, and the air core coil 33 is movable in the up-down direction with respect to the magnet coupling body 34.

The front surface of the front long portion 33a of the air core coil 33 has both upper and lower end portions each having a magnetic plate 40 attached thereto. Note that the interchangeable lens 1 may be configured such that a part of a flexible printed wiring board is bonded to the long portion 33a on the front side of the air core coil 33, the magnetic plates 40 are attached to the flexible printed wiring board, and thereby the magnetic plates 40 are attached to the air core coil 33 via the flexible printed wiring board. Furthermore, for example, one of the magnetic plates 40 may be attached to a central portion of the front long portion 33a in the up-down direction.

In the interchangeable lens 1, in a state where the magnet coupling body 34 is inserted into the air core coil 33 mounted on the second mounting protrusion 17, the magnet coupling body 34 is mounted on the outer yoke 32, and the counter yoke 36 is mounted on the bottom yoke 35. At this time, the insertion portion 17b of the second mounting protrusion 17 is inserted into the cutout portion 38a of the bottom yoke 35, and the insertion protrusions 38b are respectively inserted into the two escape holes 17a. Therefore, when the movable body 7 is moved in the second direction, the second mounting protrusion 17 does not interfere with the outer yoke 32, and the movable body 7 is smoothly moved in the second direction.

The movable body 7 is positioned in spaces surrounded by the first peripheral surface portion 9 and the second peripheral surface portion 10 on the front side of the base surface portion 8 in the fixed body 6, and is supported by the fixed body 6 via a correction drive system 22 (see Fig. 2). At this time, the sphere 41 is arranged between each of the receiving plates 11 attached to the fixed body 6 and a corresponding one of the pressing plates 21 attached to the movable body 7. The spheres 41 are each rolled with respect to the receiving plate 11 and the pressing plate 21 when the movable body 7 is moved with respect to the fixed body 6. The spheres 41 have a function of smoothly moving the movable body 7 with respect to the fixed body 6 while the movable body 7 is held at a constant distance with respect to the base surface portion 8.

The movable body 7 has flexible printed wiring boards, attached thereto, connected to a control circuit (not illustrated). The flexible printed wiring boards are attached to at least the first mounting protrusion 16 and the second mounting protrusion, and each have a circuit for supplying power to the air core coil 33. Two position detecting sensors 42 are respectively mounted on the rear surfaces of the flexible printed wiring boards. One of the two position detecting sensors 42 is arranged in the arrangement recess 16c formed in the first mounting protrusion 16 and the other thereof is arranged in the arrangement recess 17c formed in the second mounting protrusion 17.

One of the position detecting sensors 42 is positioned facing the drive magnets 30 of the first actuator 28 between the cutout portion 38a formed in the first mounting portion 38 of the first actuator 28 and the air core coil 33 of the first actuator 28. The other of the position detecting sensor 42 is positioned facing the drive magnets 30 of the second actuator 29 between the cutout portion 38a formed in the first mounting portion 38 of the second actuator 29 and the air core coil 33 of the second actuator 29.

Therefore, when the movable body 7 is moved in the first direction with respect to the fixed body 6, one of the position detecting sensors 42 detects a change in the magnetic flux generated in the drive magnets 30 of the first actuator 28, and the moving position of the movable body 7 in the first direction is sensed based on the detection result. Furthermore, the other of the position detecting sensors 42 detects a change in the magnetic flux generated in the drive magnets 30 of the second actuator 29, and the moving position of the movable body 7 in the second direction is sensed based on the detection result.

In a state where the movable body 7 is positioned on the front side of the base surface portion 8 and is supported by the fixed body 6 via the correction drive system 22, each of the magnetic plates 40 attached to the two air core coils 33 is attracted by the drive magnets 30, and the attracting magnet 20 mounted on the holding frame 13 of the movable body 7 is attracted by urging plate metal 12 mounted on the base surface 8 of fixed body 6. Therefore, the movable body 7 is attracted toward the fixed body 6 by the magnetic force, and each of the pressing plates 21 mounted on the holding frame 13 is pressed against the sphere 41, and each of the spheres 41 is pressed against the receiving plate 11 of the fixed body 6. Thus, the sphere 41 is rolled with respect to the receiving plate 11 and the pressing plate 21 when the movable body 7 is moved with respect to the fixed body 6.

Note that, instead of the configuration in which the movable body 7 is attracted toward the fixed body 6 by the magnetic force as described above, the interchangeable lens 1 may have a configuration in which the movable body 7 is attracted toward the fixed body 6 by elastic force of a spring or rubber.

As described above, each magnet coupling body 34 is inserted through the air core coil 33. In a state where the magnet coupling body 34 is inserted through the air core coil 33, an interval between the drive magnets 30 and the air core coil 33 in a direction is defined as an allowable interval, the direction being orthogonal to both the direction in which the first pole portion 30a and the second pole portion 30b are aligned and the optical axis direction.

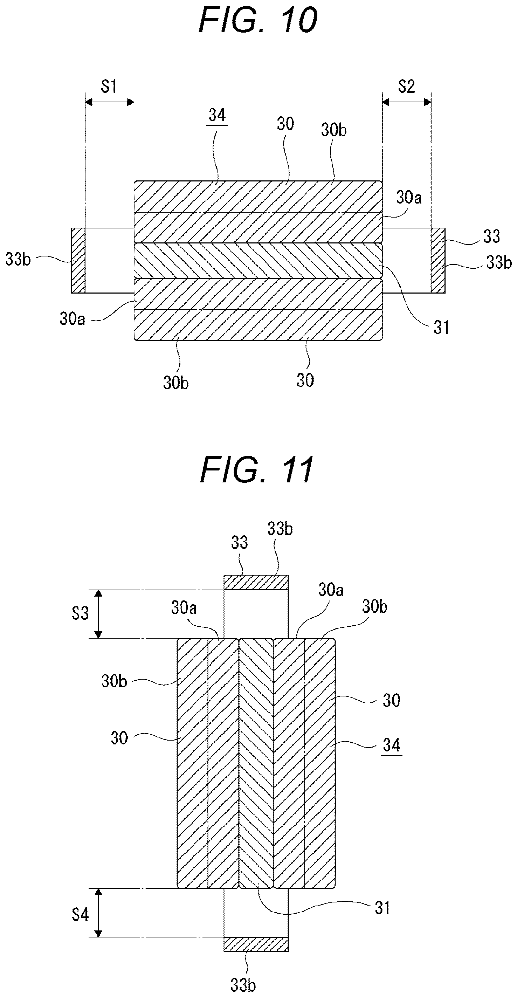

In the first actuator 28, the intervals between the drive magnets 30 and the air core coil 33 on opposite sides in the left-right direction are defined as allowable intervals S1 and S2, respectively (see Fig. 10). In the first actuator 29, the intervals between the drive magnets 30 and the air core coil 33 on opposite sides in the up-down direction are defined as allowable intervals S3 and S4, respectively (see Fig. 11). The allowable intervals S1 and S2 are individually changed along with the movement of the movable body 7 in the left-right direction, but the sum of intervals of the allowable intervals S1 and S2 is unchanged. Furthermore, the allowable intervals S3 and S4 are individually changed along with the movement of the movable body 7 in the up-down direction, but the sum of intervals of the allowable intervals S3 and S4 is unchanged.

Specifically, in a state where the movable body 7 is at the neutral position, which is the center of the movement range in the up-down direction, the allowable interval S3 and the allowable interval S4 are the same. In a state where the movable body 7 is at the neutral position, which is the center of the movement range in the left-right direction, the allowable interval S1 and the allowable interval S2 are the same.

The movable body 7 is moved in the up-down direction by the driving force of the first actuator 28, and is moved in the left-right direction by the driving force of the second actuator 29 with respect to the fixed body 6. At this time, in a case where the maximum moving distance in the up-down direction of the movable body 7 is defined as a first distance, the sum of the allowable intervals S3 and S4 is made larger than the first distance. In a case where the maximum moving distance in the left-right direction of the movable body 7 is defined as a second distance, the sum of the allowable intervals S1 and S2 is made larger than the second distance.

Therefore, in a case where the movable body 7 is moved by the driving force of the first actuator 28, the drive magnets 30 of the second actuator 29 do not interfere with the air core coil 33 of the second actuator 29. In addition, in a case where the movable body 7 is moved by the driving force of the second actuator 29, the drive magnets 30 of the first actuator 28 do not interfere with the air core coil 33 of the first actuator 28. Therefore, the movable body 7 can be moved appropriately and smoothly in the two directions.

As described above, in the interchangeable lens 1, the holding frame 13 is provided with a first mounting protrusion 16 (second mounting protrusion 17) to which the air core coil 33 is attached, a cutout portion 38a is formed in the first mounting portion 38, and the air core coil 33 is attached to the first mounting protrusion 16 (second mounting protrusion 17) in a state where the first mounting protrusion 16 (second mounting protrusion 17) is inserted through the cutout portion 38a.

Accordingly, the first mounting protrusion 16 (the second mounting protrusion 17) can be attached to the air core coil 33 without interfering with the outer yoke 32. This allows the air core coil 33 to be mounted to the movable body 7 in a state where the outer yoke 32 is kept at a certain size or more. This then makes it possible to ensure a stable mounting state of the air core coil 33 to the movable body 7 while ensuring a sufficient driving force generated in the first actuator 28 (second actuator 29).

In addition, each position detecting sensor 42, which detects the moving position of the movable body 7 based on the change in the magnetic flux generated from the drive magnets 30, is positioned between the cutout portion 38a and the air core coil 33.

Therefore, since the position detecting sensor 42 is positioned in the vicinity of the first actuator 28 (second actuator 29), it is possible to downsize the interchangeable lens 1 by effectively using a space.

Furthermore, since the position of the movable body 7 is detected using the drive magnets 30 of the first actuator 28 (the second actuator 29), the detection accuracy can be improved, and a dedicated magnet for position detection is not required, making it possible to reduce the number of components of the interchangeable lens 1 and further downsize the interchangeable lens 1.

Moreover, a plurality of spheres 41 are arranged between the fixed body 6 and the movable body 7 so that the movable body 7 is made movable by rolling of the spheres 41 with respect to the fixed body 6, and the magnetic plates 40 are attached to each air core coil 33 and the magnetic plates 40 are attracted by the drive magnets 30 so that the movable body 7 is urged in a direction to approach the fixed body 6.

Thus, the magnetic plates 40 are attracted by the drive magnets 30 to cause the movable body 7 to be pressed against the fixed body 6 via the spheres 41. This simplifies the structure for pressing the movable body 7 against the fixed body 6 via the spheres 41, and allows the movable body 7 to be smoothly moved with respect to the fixed body 6 while simplifying the structure.

Furthermore, each air core coil 33 is formed in a rectangular tubular shape, includes a pair of long portions 33a and a pair of short portions 33b, and has the two magnetic plates 40 respectively attached to its opposite end portions in the longitudinal direction of the long portion 33a.

Accordingly, the magnetic plates 40 are positioned in a direction orthogonal to the axial direction of the air core coil 33. This causes the air core coil 33 to be less likely to incline with respect to the drive magnets 30 in a state where the air core coil 33 is attracted to the drive magnets 30, making it possible to stabilize the position of the movable body 7 with respect to the fixed body 6 and to ensure a smoother moving state of the movable body 7 with respect to the fixed body 6.

Furthermore, the two magnetic plates 40 are respectively attached to the opposite end portions in the longitudinal direction of the long portion 33a, and thereby the two magnetic plates 40 are respectively positioned at portions in the air core coil 33, the portions being where the air core coil 33 is attached to the coil mounting protrusion 16d or 17d.

Accordingly, the attractive forces of the drive magnets 30 acting on the magnetic plates 40 are generated in the portions where the air core coil 33 is attached to the coil mounting protrusion 16d or 17d. This makes it possible to prevent the air core coil 33, and the first mounting protrusion 16 or the second mounting protrusion 17 from being deformed due to the generation of the attractive forces.

### <Operation in Interchangeable Lens>

In the interchangeable lens 1 configured as described above, when a camera shake occurs at the time of imaging or the like, a state of camera shake is detected by a camera shake detection unit. The detection result is transmitted as an analog signal to a camera shake signal processing unit. The transmitted analog signal is converted into a digital signal indicating the magnitude and direction of the camera shake by the camera shake signal processing unit, and the digital signal is transmitted to the control unit. As the camera shake detection unit, for example, a gyro sensor or the like is used.

On the other hand, the position of the movable body 7 is detected by the position detecting sensors 42 described above. The a detection result is transmitted to a position detection signal processing unit as an analog signal. The transmitted analog signal is converted into a digital signal indicating the position of the movable body 7 by the position detection signal processing unit, and the digital signal is transmitted to the control unit.

When digital signals from the camera shake signal processing unit and the position detection signal processing unit are each input to the control unit, feedback control is performed based on both input digital signals, so that a drive current of a predetermined magnitude and direction is supplied to both or one of the air core coil 33 of the first actuator 28 and the air core coil 33 of the second actuator 29, and the shake correction operation is performed by the shake correction mechanism 5.

When a drive current is supplied to the air core coil 33 of the first actuator 28, a moving force in the up-down direction is applied to the air core coil 33 in relation to the magnetic flux generated in the drive magnets 30, and the movement of the air core coil 33 causes the movable body 7 to be moved in the up-down direction with respect to the fixed body 6. At this time, in the correction drive system 22, the support arm 23 is moved in the axial direction of the first shaft member 24 with respect to the first shaft member 24, and the second shaft member 25 is moved with respect to the shaft support hole 27a of the support arm 23, so that the movable body 7 is moved in the up-down direction without being rotated in the roll direction.

When a drive current is supplied to the air core coil 33 of the second actuator 29, a moving force in the left-right direction is applied to the air core coil 33 in relation to the magnetic flux generated in the drive magnets 30, and the movement of the air core coil 33 causes the movable body 7 to be moved in the left-right direction with respect to the fixed body 6. At this time, in the correction drive system 22, the support arm 23 is moved in the axial direction of the first shaft member 24 with respect to the first shaft member 24, and the second shaft member 25 is moved with respect to the shaft support hole 27a of the support arm 23, so that the movable body 7 is moved in the left-right direction without being rotated in the roll direction.

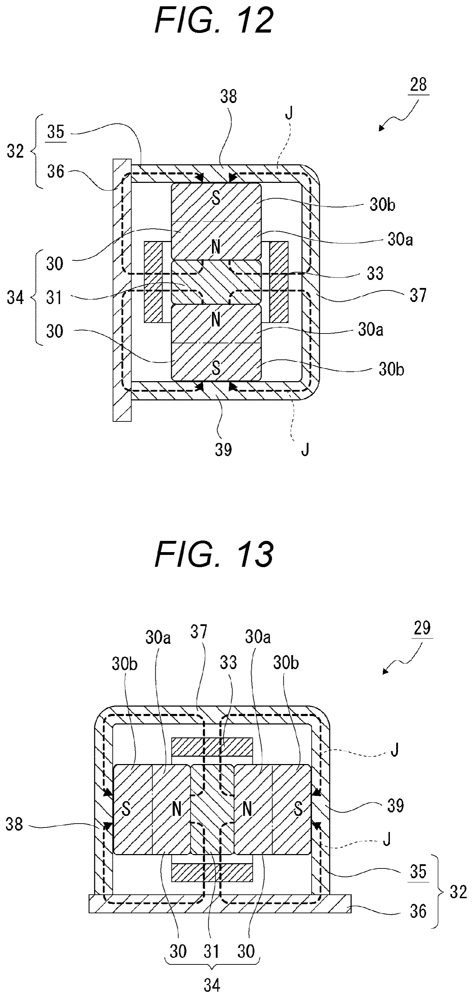

In each of the first actuator 28 and the second actuator 29, the pair of drive magnets 30 has the first pole portions 30a brought into a state of facing each other with the inner yoke 31 interposed therebetween, and the second pole portions 30b are each attached to a corresponding one of the first mounting portion 38 and the second mounting portion 39 of the outer yoke 32 (see Figs. 12 and 13). Therefore, in each of the first actuator 28 and the second actuator 29, a magnetic flux J is generated that passes from the first pole portions 30a through the outer yoke 32 to the second pole portions 30b. At this time, the air core coil 33 is moved in the direction in which the pair of drive magnets 30 are aligned between the first mounting portion 38 and the second mounting portion 39. Therefore, the driving force (thrust) in each of the first actuator 28 and the second actuator 29 is less likely to change regardless of the moving position of the air core coil 33, and the driving force in each of the first actuator 28 and the second actuator 29 is less likely to decrease regardless of the moving position of the air core coil 33 in the up-down direction or the left-right direction.

In particular, each of the first actuator 28 and the second actuator 29 is configured such that the pair of drive magnets 30 is positioned inside the outer yoke 32 and the pair of drive magnets 30 is covered over its entire periphery by the outer yoke 32, generating a large driving force.

### <Conclusion>

As described above, in the interchangeable lens 1 and the imaging device 100, the pair of drive magnets 30 and the inner yoke 31 are positioned between the first mounting portion 38 and the second mounting portion 39 in a state of being inserted into the air core coil 33, the pair of drive magnets 30 has the first pole portions 30a respectively attached to the opposite surfaces of the inner yoke 31 and the second pole portions 30b each attached to a corresponding one of the first mounting portion 38 and the second mounting portion 39, and the axial direction of each of the air core coils 33 of the first actuator 28 and the second actuator 29 coincides with a corresponding one of the moving directions of the movable body 7.

Therefore, each of the air core coils 33 is moved in its axial direction with respect to the pair of drive magnets 30 to perform shake correction, the drive magnets having the first pole portions 30a respectively attached to the opposite surfaces of the inner yoke 31, the drive magnets having the second pole portions 30b each attached to a corresponding one of the first mounting portion 38 and the second mounting portion 39.

Therefore, the driving forces in the first actuator 28 and the second actuator 29 are less likely to decrease regardless of the moving positions of the air core coils 33. This makes it possible to achieve downsizing while preventing decrease in the driving forces of the first actuator 28 and the second actuator 29 at the time of shake correction.

Furthermore, each outer yoke 32 is formed in an annular shape by the bottom yoke 35 having the first mounting portion 38, and the counter yoke 36 having parts each mounted on a corresponding one of the first mounting portion 38 and the second mounting portion 39, and the air core coil 33, the drive magnets 30, and the inner yoke 31 are positioned inside the outer yoke 32.

Therefore, the air core coil 33, the drive magnets 30, and the inner yoke 31 are positioned inside each outer yoke 32 formed in an annular shape. This prevents leakage of the magnetic flux generated from the drive magnets 30, making it possible to increase the driving force of each of the first actuator 28 and the second actuator 29 and to achieve downsizing.

### <Others>

The example of the configuration has been described above in which the moving position of the movable body 7 is detected based on the change in the magnetic flux generated from the drive magnets 30. However, for example, the configuration may be such that two magnets for detection are attached to the base surface portion 8 of the fixed body 6, position detecting sensors respectively facing the magnets are attached to the holding frame 13 of the movable body 7, and the moving position of the movable body 7 is detected based on the change in the magnetic flux generated from the drive magnets 30 for detection.

However, the configuration, in which the moving position of the movable body 7 is detected based on the change in the magnetic flux generated from the drive magnets 30 of the first actuator 28 and the second actuator 29, does not require dedicated magnets for detection, and makes it possible to reduce the number of components and the weight.

In addition, in the above description, an example has been described in which the three spheres 41 that can roll are arranged between the fixed body 6 and the movable body 7. However, for example, the fixed body 6 may be configured to include a first holding frame that is movable in one of the up-down direction and the left-right direction and a second holding frame that is movable in the other of the up-down direction and the left-right direction. In such a configuration, for example, the first holding frame is guided on the front side of the fixed body 6 by the first guide shaft or the like to be movable in the up-down direction or the left-right direction with respect to the fixed body 6, and the second holding frame is guided on the front side of the first holding frame by the second guide shaft or the like to be movable in the left-right direction or the up-down direction with respect to the first holding frame.

However, the configuration, in which the spheres 41 that can roll are arranged as described above, has no clearance between the guide shafts and the bearings as in the case of using the guide shafts, also making it possible to ensure a stable operation state of the movable body 7 and to reduce the number of components and the weight. Furthermore, the configuration, in which the spheres 41 that can roll are arranged as described above, does not require an arrangement space for guide shafts and bearings to make it possible also to achieve downsizing, and makes the spheres 41 in point contact with the receiving plate 11 and the pressing plate 21 to reduce a sliding load during movement of the movable body 7, making it possible to move the movable body 7 with a small driving force.

### <Measurement Data>

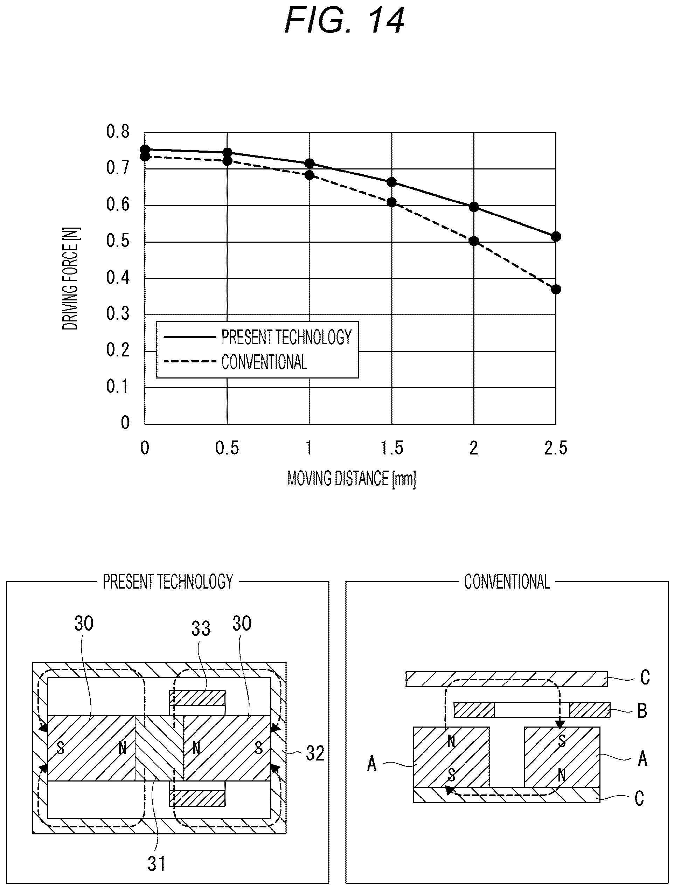

Measurement data of the shake correction mechanism 5 of the interchangeable lens 1 will be described below (see Figs. 14 to 16).

First, measurement data of the driving force (thrust) generated in the first actuator 28 (second actuator 29) will be described (see Fig. 14).

The graph illustrated in Fig. 14 has a horizontal axis representing the moving distance (mm) of the air core coil 33, has a vertical axis representing the driving force (N), and illustrates the magnitude of the driving force when the air core coil 33 moves. A solid line is measurement data for the shake correction mechanism 5 according to the present technology, and a broken line is measurement data for a conventional shake correction mechanism.

The conventional shake correction mechanism is a type having a configuration in which a pair of drive magnets A are positioned side by side in a moving direction of air core coil B, and air core coil B is moved between drive magnets A and yoke C. The air core coil B is moved in a direction orthogonal to the axial direction.

As illustrated in Fig. 14, in the shake correction mechanism 5 according to the present technology, a decrease in the driving force is prevented as compared with the conventional shake correction mechanism 5 even in a case where the moving distance of the air core coil 33 increases.

Therefore, this demonstrates that the interchangeable lens 1 and the imaging device 100 can achieve downsizing while preventing a decrease in the driving force of the actuator 50 and the second actuator 29 at the time of shake correction.

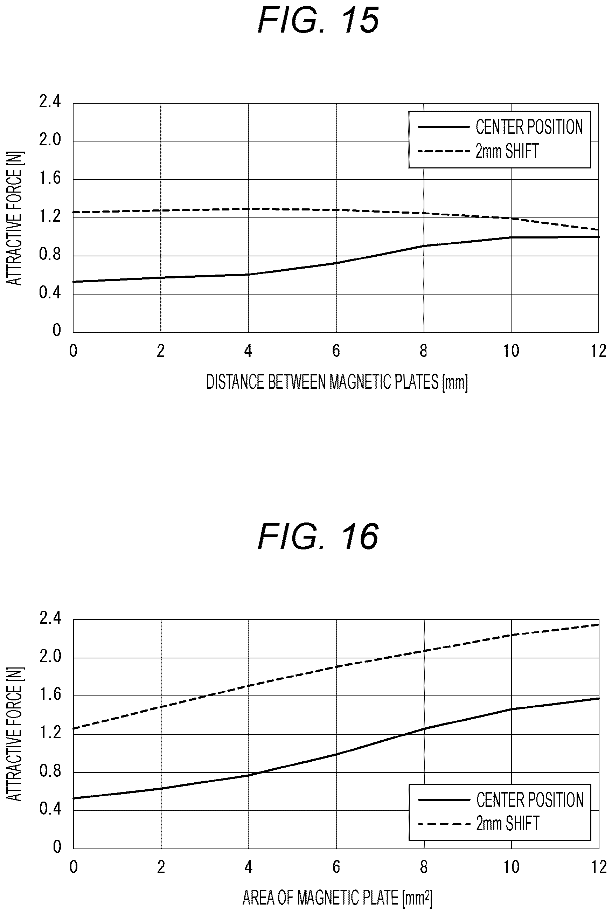

Next, measurement data of the attractive force in the optical axis direction of the drive magnets 30 to the magnetic plate 40 will be described (see Figs. 15 and 16).

Fig. 15 is measurement data showing the relationship between the distance between the magnetic plates 40 and the attractive force of the drive magnets 30, and Fig. 16 is measurement data showing the relationship between the area of each magnetic plate 40 and the attractive force of the drive magnets 30. The data in Fig. 15 is data obtained by measuring the value of the attractive force when the distance between the two magnetic plates 40 having the same area is changed, and the data in Fig. 16 is data obtained by measuring the value of the attractive force when the width of the magnetic plate 40 is constant and the length thereof is changed. In both the measurements of Figs. 15 and 16, the values of the attractive forces are measured when the movable body 7 is at the central position (neutral position) in the movement range and when the movable body 7 is moved by 2 mm.

The actuator 50 and the second actuator 29 are each provided with a structure in which the inner yoke 31 is positioned between the two drive magnets 30 serving as the magnet coupling body 34. At the neutral position, the attractive force of the drive magnets 30 to the magnetic plates 40 is larger at both end portions than at the central portion in the direction in which the two drive magnets 30 and the inner yoke 31 are coupled (see the solid line in Fig. 15).

Furthermore, as the area of each magnetic plate 40 increases, the attractive force of the drive magnets 30 increases (see Fig. 16).

Moreover, the two magnetic plates 40 are attached to positions where the attractive force is large, so that the fluctuation in the attractive force decreases when the movable body 7 is moved with respect to the fixed body 6 during the shake correction operation (see Fig. 15). For example, in a case where the distance is 0 mm in which the magnetic plates 40 are attached to the central portion, the difference in attractive force is about 0.8 N for the movement of 2 mm of the movable body 7. In a case where the distance is 12 mm in which the magnetic plates 40 are attached to the opposite ends, the difference in attractive force is about 0.1 N for the movement of 2 mm of the movable body 7. This indicates that the fluctuation of the attractive force is reduced by attaching the two magnetic plates 40 to the position where the attractive force is large.

As shown in the above-described measurement data of Figs. 15 and 16, it has been confirmed that, in the interchangeable lens 1, the magnetic plates 40 are desirably attached to the opposite end portions in the longitudinal direction of the long portion 33a of the air core coil 33 to prevent the fluctuation in the attractive force.

### <Modified Example of Actuator>

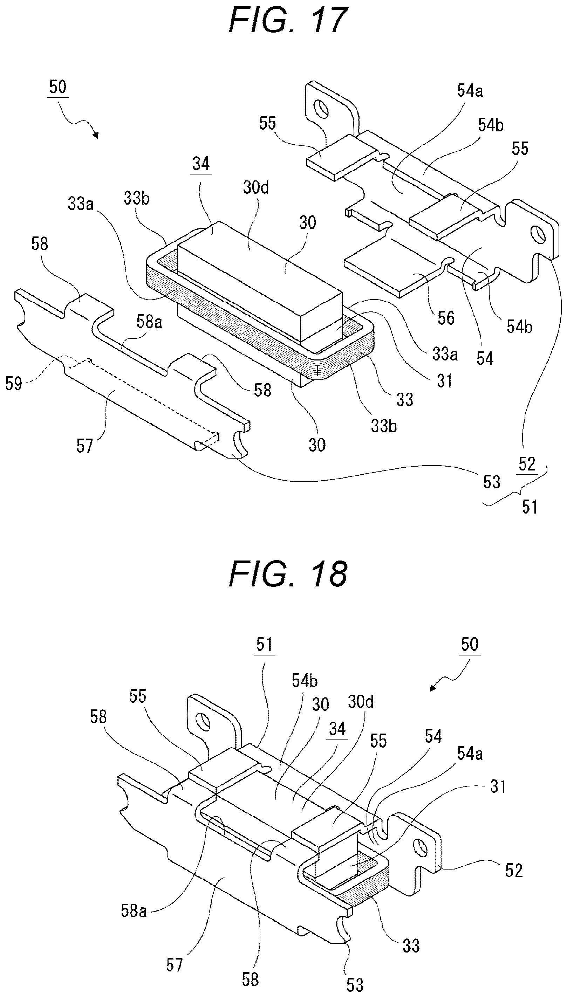

Hereinafter, actuators according to modified examples of the first actuator 28 and the second actuator 29 described above will be described (see Figs. 17 to 22). The actuator according to a modified example described below is different from the first actuator 28 and the second actuator 29 described above only in the configuration of the outer yoke. For this reason, regarding the actuator according to the modified example, only portions different from the first actuator 28 and the second actuator 29 will be described in detail, and the other portions will be denoted by the same reference numerals and characters as those assigned to the similar portions in the first actuator 28 and the second actuator 29, and the description thereof will be omitted.

Note that the actuator according to the modified example can be used in place of any of the first actuator 28 and the second actuator 29. Therefore, in a case where the actuator according to the modified example is used instead of the first actuator 28, the axial direction of the air core coil is set to the up-down direction and the pair of drive magnets and the inner yoke are coupled in the up-down direction, similarly to the first actuator 28. In a case where the actuator according to the modified example is used instead of the second actuator 29, the axial direction of the air core coil is set to the left-right direction, and the pair of drive magnets and the inner yoke are coupled in the left-right direction, similarly to the second actuator 29.

Hereinafter, the description will be given about the orientation in a case where the actuator according to the modified example is used instead of the first actuator 28.

In the actuator, since the drive magnets receive the attractive forces from both the inner yoke and the outer yoke, in a case where each drive magnet receives a larger attractive force from the outer yoke side than from the inner yoke side, there is a possibility that the coupling state between the drive magnet and the inner yoke becomes unstable. Then, in order to prevent the occurrence of such a structural defect, it is desirable to use an actuator according to the following modified example.

In addition, using the actuator according to the following modified example allows each drive magnet to have a larger size, and can therefore improve the thrust (driving force).

Each actuator 50 according to the modified example includes a pair of drive magnets 30, an inner yoke 31, an outer yoke 51, and an air core coil 33 (see Figs. 17 to 20).

The outer yoke 51 is formed in a substantially rectangular tubular shape with a hole penetrating in the left-right direction, and is configured by mounting a counter yoke 53 on a bottom yoke 52. In the outer yoke 51, both bottom yoke 52 and counter yoke 53 include a magnetic material such as a metal plate.

The bottom yoke 52 includes a base portion 54 formed in a horizontally long shape, a pair of first facing portions 55 protruding forward from an upper end portion of the base portion 54, and a second facing portion 56 protruding forward from a lower end portion of the base portion 54.

The base portion 54 includes a reference surface portion 54a having a plate shape facing the front-rear direction and a pair of bent portions 54b each bent forward with respect to a corresponding one of upper and lower end portions of the reference surface portion 54a. The bent portion 54b is continuous in a portion other than the left and right end portions of the reference surface portion 54a.

The pair of first facing portions 55 is provided in a state of protruding forward respectively from the left and right end portions of the bent portion 54b on the upper side. The second facing portion 56 is provided in a state of protruding forward from a central portion in the left-right direction of the bent portion 54b on the lower side.

The first facing portions 55 and the second facing portion 56 have the same length in the front-rear direction. The total width of the pair of first facing portions 55 in the left-right direction is equal to the width of the second facing portion 56 in the left-right direction. However, the total width of the first facing portions 55 in the left-right direction may be different from the width of the second facing portion 56 in the left-right direction.

The counter yoke 53 includes a horizontally long main surface portion 57 facing the front-rear direction, a pair of first mounting portions 58 each protruding rearward from an upper end portion of the main surface portion 57, and a second mounting portion 59 protruding rearward from a lower end portion of the main surface portion 57.

The pair of first mounting portions 58 is positioned in a state of being separated from each other in the left-right direction, and the positions in the left-right direction respectively coincide with the positions of the first facing portions 55 in the left-right direction. The second mounting portion 59 protrudes from a portion of the main surface portion 57 excluding both left and right end portions and is formed in a horizontally long shape. The first mounting portions 58 and the second mounting portion 59 have the same length in the front-rear direction.

The rearward protrusion amounts of the first mounting portions 58 and the second mounting portion 59 from the main surface portion 57 are smaller than the forward protrusion amounts of the first facing portions 55 and the second facing portion 56 from the base portion 54. Therefore, the lengths of the first facing portions 55 and the second facing portion 56 in the front-rear direction are longer than the lengths of the first mounting portions 58 and the second mounting portion 59 in the front-rear direction.

The distal end portions of the first facing portions 55 are respectively mounted on the distal end portions of the first mounting portions 58, and the distal end portion of the second facing portion 56 is mounted on the distal end portion of the second mounting portion 59.

A cutout portion 58a is formed between the pair of first mounting portions 58 in the counter yoke 53, and the cutout portion 58a is opened rearward.

The front end portion of the upper end portion of the magnet coupling body 34 and the front end portion of the lower end portion thereof are respectively attached to the distal end portions of the first facing portions 55 and the distal end portion of the second facing portion 56 of the counter yoke 53 by, for example, adhesion or the like. Therefore, the upper end portion of the upper drive magnets 30 is attached to the distal end portions of the first facing portions 55, and the lower end portion of the lower drive magnets 30 is attached to the distal end portion of the second facing portion 56.

Furthermore, each of the pair of first facing portions 55 in the bottom yoke 52 is positioned in a state of facing a corresponding one of the left and right end portions of the upper surface of the upper drive magnet 30.

The second facing portion 56 of bottom yoke 52 is positioned in a state of facing the central portion in the left-right direction of the lower surface of lower drive magnets 30.

Note that the magnet coupling body 34 is inserted between the first facing portions 55 and the second facing portion 56 at the time of assembly, but is designed such that a slight gap is formed between the first facing portions 55 and the upper surface of the upper drive magnet 30 and a slight gap is formed between the second facing portion 56 and the lower surface of the lower drive magnet 30 in order to reliably perform insertion.

In a state where the magnet coupling body 34 is inserted between the first facing portions 55 and the second facing portion 56, the upper drive magnet 30 is attached to the lower surfaces of the first facing portions 55 by, for example, adhesion, and the lower drive magnet 30 is attached to the upper surface of the second facing portion 56 by, for example, adhesion.

In the interchangeable lens 1 using the actuator 50, the insertion portion 16b of the first mounting protrusion 16 is inserted into the cutout portion 58a of the counter yoke 53, and the first mounting portions 58 are respectively inserted into the two escape holes 16a. Therefore, when the movable body 7 is moved in the first direction and the second direction, the first mounting protrusion 16 does not interfere with the outer yoke 51, and the movable body 7 is smoothly moved in the first direction and the second direction.

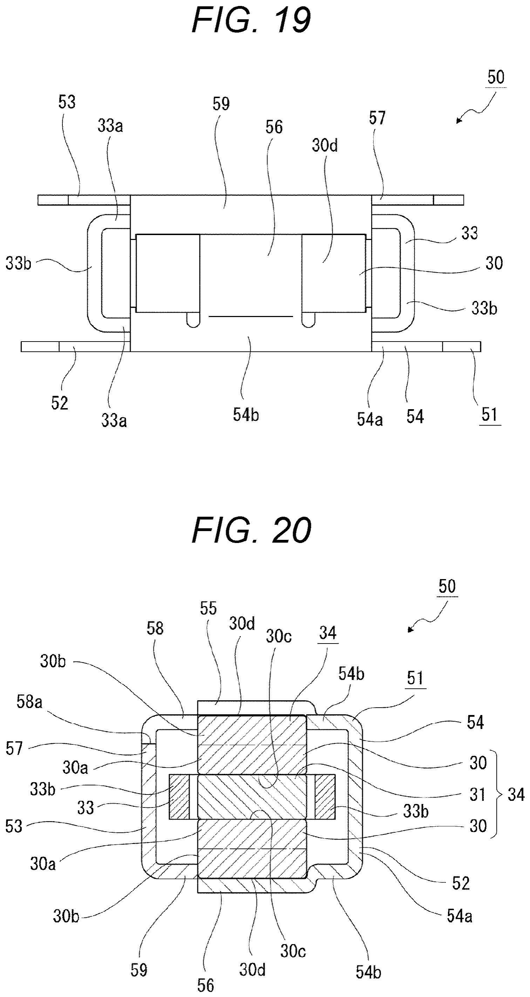

As described above, the magnet coupling body 34 is configured by attaching each of the drive magnets 30 to a corresponding one of the upper and lower surfaces of the inner yoke 31. In each of the drive magnets 30, a surface attached to the inner yoke 31 is formed as a first surface 30c, and a surface opposite to the first surface 30c is formed as a second surface 30d (see Fig. 20). Therefore, each of the first facing portions 55 and the second facing portion 56 is positioned in a state of facing a part of a corresponding one of the second surfaces 30d.

Specifically, each of the first facing portions 55 is positioned in a state of facing a corresponding one of the left and right end portions of a second surface 30d, and the second facing portion 56 is positioned in a state of facing the central portion of a second surface 30d in the left-right direction (see Figs. 18 to 20). Therefore, in the actuator 50, the facing area that is an area of where each second surface 30d faces the outer yoke 51 is made smaller than the contact area that is an area of where each first surface 30c is in contact with the drive magnet 30, and at least a part of the second surface 30d is exposed without being covered by the outer yoke 51.

As described above, in the actuator 50, the difference in the facing area and the contact area of the drive magnets 30 causes the attractive force of the inner yoke 31 to the drive magnets 30 to be larger than the attractive force of the outer yoke 51 to the drive magnets 30. This can ensure the stable coupling state of the pair of drive magnets 30 and the inner yoke 31, and can ensure the stable operation state of the actuator 50.

Furthermore, since the size of the drive magnets 30 can be further increased, the thrust (driving force) generated in the actuator 50 can be improved.

Moreover, a part of each of the second surfaces 30d of the drive magnets 30 faces a corresponding one of the first facing portions 55 and the second facing portion 56. Therefore, even in a case where a force in a direction in which the drive magnets 30 are peeled off from the inner yoke 31 is generated by vibration, impact, or the like, the drive magnets 30 are pressed by the first facing portions 55 and the second facing portion 56, and the drive magnets 30 can be prevented from being peeled off from the inner yoke 31.

Furthermore, the two first facing portions 55 provided in the outer yoke 51 are positioned in a state of being separated from each other in the direction orthogonal to the axial direction of the air core coil 33.

Therefore, since the two first facing portions 55 are positioned in a separated state, facing the drive magnet 30, interference between the outer yoke 51 and other components, for example, the lens 14 held by the holding frame 13 can be easily avoided, and the interchangeable lens 1 can be downsized.

Note that, in the actuator 50, two second facing portions 56 may also be provided in a separated state.

Furthermore, the outer yoke 51 is formed in an annular shape by the counter yoke 53 having the first mounting portions 58 and the second mounting portion 59 and the bottom yoke 52 having parts each attached to a corresponding one of the first mounting portions 58 and the second mounting portion 59, and the air core coil 33, the drive magnets 30, and the inner yoke 31 are positioned inside the outer yoke 51.

Therefore, since the air core coil 33, the drive magnets 30, and the inner yoke 31 are positioned inside the outer yoke 51 formed in the annular shape, the magnetic flux generated from the drive magnets 30 is prevented from leakage, the driving force of the actuator 50 can be increased, and downsizing can be achieved.

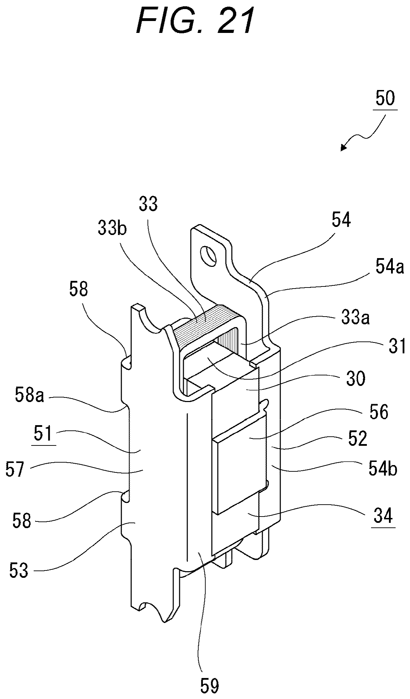

Note that in a case where the actuator 50 is used as the second actuator, the drive magnets 30 are set to the vertically long state, the pair of drive magnets 30 and the inner yoke 31 are aligned in the left-right direction, and the axial direction of the air core coil 33 is set to the left-right direction (see Fig. 21). In this case, first facing portions 55 and the second facing portion 56 of the bottom yoke 52 are aligned in the left-right direction, and the first mounting portions 58 and the second mounting portion 59 of counter yoke 53 are aligned in the left-right direction.

### <Measurement Data for Actuator According to Modified Example>

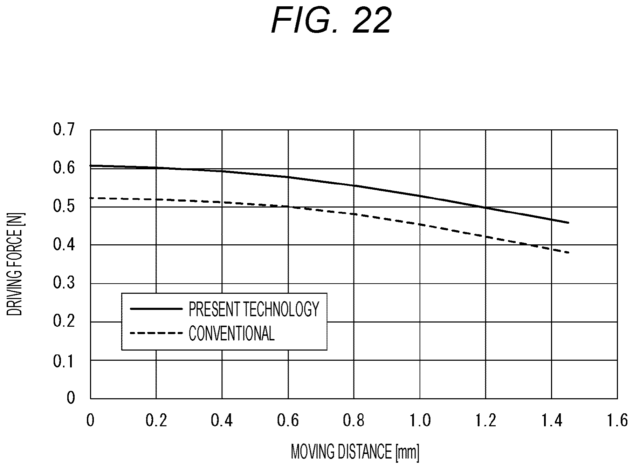

Measurement data of the driving force (thrust) generated in the actuator 50 will be described below (see Fig. 22).

The graph illustrated in Fig. 22 has a horizontal axis representing the moving distance (mm) of the air core coil 33, has a vertical axis representing the driving force (N), and illustrates the magnitude of the driving force when the air core coil 33 moves. A solid line is measurement data in a case where the actuator 50 is used in the shake correction mechanism 5 according to the present technology, and a broken line is measurement data for the conventional shake correction mechanism.

The conventional shake correction mechanism is of a type having a configuration similar to the configuration illustrated as "conventional " in Fig. 14.

As illustrated in Fig. 22, in the shake correction mechanism 5 in which actuator 50 is used, the size of drive magnets 30 is increased, so that a larger driving force can be obtained as compared with the conventional shake correction mechanism.

Therefore, it has been demonstrated that the interchangeable lens 1 and the imaging device 100 can achieve downsizing while preventing a decrease in the driving force of the actuator 50 at the time of shake correction.

### <An Embodiment of Imaging Device>

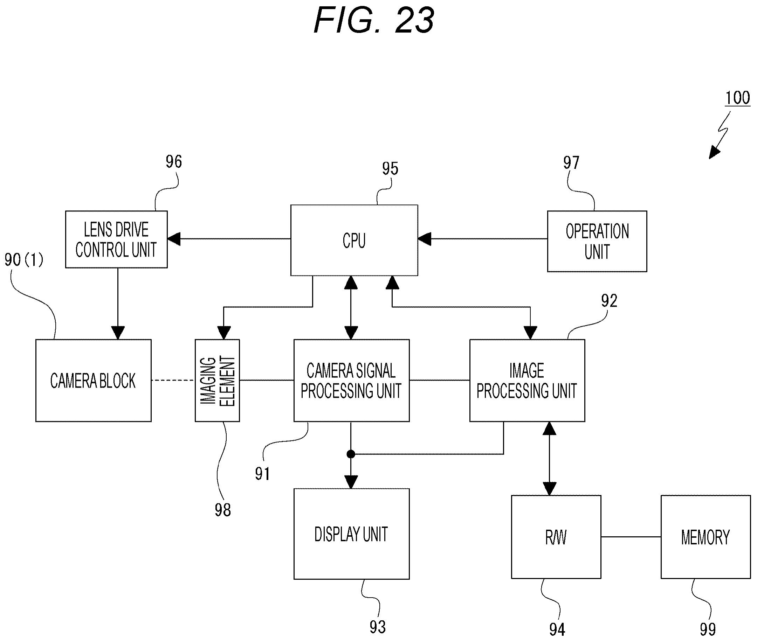

In the following, an example configuration of an embodiment of an imaging device according to the present technology is described (see Fig. 23).

A camera block 90 having an imaging function is attachable to and detachable from the imaging device 100. The imaging device 100 includes: a camera signal processing unit 91 that performs signal processing such as analog-digital conversion of a captured image signal; and an image processing unit 92 that performs a recording/reproducing process on the image signal. Furthermore, the imaging device 100 includes: a display unit 93 that displays a captured image and the like; a reader/writer (R/W) 94 that writes and reads an image signal into and from a memory 99; a central processing unit (CPU) 95 that controls the entire imaging device 100; a lens drive control unit 96 that controls driving of the lens arranged in the camera block 90; and an operation unit 97 (202) such as various switches on which a user performs required operations.

The camera block 90 is an interchangeable lens 1, for example.

The imaging device 100 is provided with an imaging element 98 such as a CCD or a CMOS that converts an optical image captured by the camera block 90 into an electrical signal.

The camera signal processing unit 91 performs various kinds of signal processing such as conversion of an output signal from the imaging element 98 into a digital signal, noise removal, image quality correction, and conversion into a luminance/color difference signal.

The image processing unit 92 performs a compression encoding/decompression decoding process on an image signal based on a predetermined image data format, a conversion process on data specification such as resolution, and the like.

The display unit 93 has a function of displaying various kinds of data such as an operating state of the user on the operation unit 97 and a captured image. Note that the imaging device 100 also needs not to be provided with the display unit 93, and may be configured so that captured image data is transmitted to another display unit, and the image is displayed.

The R/W 94 writes image data encoded by the image processing unit 92 into the memory 99, and reads image data recorded in the memory 99.

The CPU 95 functions as a control processing unit that controls each circuit block provided in the imaging device 100, and controls each circuit block based on an instruction input signal or the like from the operation unit 97.

The lens drive control unit 96 controls a drive source that moves the lens based on a control signal from the CPU 95.

The operation unit 97 outputs an instruction input signal in accordance with a user operation, to the CPU 95.

The memory 99 is a semiconductor memory attachable to and detachable from a slot connected to the R/W 94, or a semiconductor memory incorporated beforehand into the imaging device 100, for example.

The operation in the imaging device 100 is hereinafter described.

In a standby state for imaging, under the control of the CPU 95, a captured image signal is output to the display unit 93 via the camera signal processing unit 91, and is displayed as a through-the-camera image. Furthermore, when an instruction input signal from the operation unit 97 is input, the CPU 95 outputs a control signal to the lens drive control unit 96, and the lens is moved based on the control performed by the lens drive control unit 96.

When an imaging operation is performed in accordance with the instruction input signal from the operation unit 97, a captured image signal is output from the camera signal processing unit 91 to the image processing unit 92, is subjected to a compression encoding process, and is converted into digital data in a predetermined data format. The converted data is output to the R/W 94, and is written into the memory 99.

In a case where the image data recorded in the memory 99 is reproduced, predetermined image data is read from the memory 99 by the R/W 94 in response to an operation performed on the operation unit 97, and a decompression decoding process is performed by the image processing unit 92. After that, a reproduced image signal is output to the display unit 93, and a reproduced image is displayed.

Note that, in the present technology, the term "imaging" refers to processing including only some of or all of a series of processes starting from a photoelectric conversion process of converting captured light into an electrical signal by the imaging element 98, processing such as conversion of the output signal from the imaging element 98 into a digital signal, noise removal, image quality correction, and conversion into a luminance/color difference signal by the camera signal processing unit 91, a compression encoding/decompression decoding process for an image signal based on a predetermined image data format, and a process of converting the data specification such as the resolution by the image processing unit 92, till a process of writing the image signal into the memory 99 by the R/W 94.

That is, "imaging" may refer to only a photoelectric conversion process of converting light captured by the imaging element 98 into an electrical signal, may refer to processing from a photoelectric conversion process of converting light captured by the imaging element 98 into an electrical signal to processing such as conversion of an output signal from the imaging element 98 into a digital signal, noise removal, image quality correction, conversion into a luminance/color difference signal, or the like to be performed by the camera signal processing unit 91, may refer to processing from a photoelectric conversion process of converting light captured by the imaging element 98 into an electrical signal to a compression encoding and decompression decoding process for an image signal based on a predetermined image data format by the image processing unit 92 or a process of converting a data specification such as resolution via processing such as conversion of an output signal from the imaging element 98 into a digital signal, noise removal, image quality correction, conversion into a luminance/color difference signal, or the like by the camera signal processing unit 91, may refer to processing from a photoelectric conversion process of converting light captured by the imaging element 98 into an electrical signal to processing such as conversion of an output signal from the imaging element 98 into a digital signal, noise removal, image quality correction, conversion into a luminance/color difference signal, or the like by the camera signal processing unit 91, a compression encoding and decompression decoding process for an image signal based on a predetermined image data format by the image processing unit 92, or a process of converting a data specification such as resolution, or may refer to processing up to processing of writing an image signal into the memory 99 to be performed by the R/W 94.

In the above-described processing, the order of the individual processing may be changed as appropriate.

Furthermore, in the present technology, the camera block 90 and the imaging device 100 may include only some of or all of the imaging element 98, the camera signal processing unit 91, the image processing unit 92, and the R/W 94 that perform the above-described processing.

Moreover, the camera block 90 may include some of the imaging element 98, the camera signal processing unit 91, the image processing unit 92, and the R/W 94.

### <Present Technology>

The present technology can have the following configurations.
(1) An interchangeable lens, including:
   a fixed body fixed inside an outer cylinder;
   a movable body including a holding frame that holds a lens, the movable body being moved with respect to the fixed body in a first direction and a second direction each orthogonal to an optical axis direction; and
   two actuators that each apply a moving force in a corresponding one of the first direction and the second direction,
   in which each of the actuators includes an air core coil mounted on the movable body, an outer yoke mounted on the fixed body, a pair of drive magnets, and an inner yoke on which the pair of drive magnets is mounted,
   each of the drive magnets includes a first pole portion and a second pole portion,
   the outer yoke is provided with a first mounting portion and a second mounting portion positioned in a state of facing each other,
   the pair of drive magnets and the inner yoke are positioned between the first mounting portion and the second mounting portion in a state where the pair of drive magnets and the inner yoke are inserted into the air core coil,
   in the pair of drive magnets, the first pole portions are respectively mounted on opposite surfaces of the inner yoke, and the second pole portions are each mounted on a corresponding one of the first mounting portion and the second mounting portion,
   an axial direction of the air core coil in an actuator that applies a moving force in the first direction coincides with the first direction, and
   an axial direction of the air core coil in an actuator that applies a moving force in the second direction coincides with the second direction.
(2) The interchangeable lens according to the (1), in which
   the holding frame is provided with a first mounting protrusion and a second mounting protrusion on each of which the air core coil is mounted,
   each of the first mounting protrusion and the second mounting protrusion includes a cutout portion, and
   each of the first mounting protrusion and the second mounting protrusion is inserted into a corresponding one of the cutout portions.
(3) The interchangeable lens according to the (2), in which
   between each of the cutout portions and a corresponding one of the air core coils, a position detecting sensor is positioned, the position detecting sensor detecting a moving position of the movable body based on a change in a magnetic flux generated from the drive magnets.
(4) The interchangeable lens according to any of the (1) to (3), in which
   one of the actuators and another of the actuators are respectively provided as a first actuator and a second actuator,
   a maximum moving distance of the movable body moved by a driving force of the first actuator is defined as a first moving distance, and a maximum moving distance of the movable body moved by a driving force of the second actuator is defined as a second moving distance,
   in a direction orthogonal to both a direction in which the first pole portions and the second pole portions are aligned and an optical axis direction, an interval between one surface of the drive magnets and the air core coil and an interval between another surface of the drive magnets and the air core coil are each defined as an allowable interval, and
   a sum of the allowable intervals in the first actuator is made larger than the second moving distance, and a sum of the allowable intervals in the second actuator is made larger than the first moving distance.
(5) The interchangeable lens according to any of the (1) to (3), in which
   a plurality of spheres are arranged between the fixed body and the movable body,
   the movable body is made movable with respect to the fixed body by rolling of the spheres,
   one or more magnetic plates are attached to each of the air core coils, and
   each of the magnetic plates is attracted by the drive magnets to urge the movable body in a direction in which the movable body approaches the fixed body in the optical axis direction.
(6) The interchangeable lens according to the (5), in which
   each of the air core coil is formed in a rectangular tubular shape and includes a pair of long portions and a pair of short portions, and
   the magnetic plates are attached to opposite end portions in a longitudinal direction of the long portion.
(7) The interchangeable lens according to any of the (1) to (3), in which
   each of the outer yokes is formed in an annular shape by a bottom yoke and a counter yoke, the bottom yoke having the first mounting portion and the second mounting portion, the counter yoke having parts each mounted on a corresponding one of the first mounting portion and the second mounting portion, and
   the air core coil, the drive magnets, and the inner yoke are positioned inside the outer yoke.
(8) The interchangeable lens according to the (1), in which
   a surface, mounted on the inner yoke, of each of the drive magnets is formed as a first surface,
   a surface, opposite to the first surface, of the drive magnet is formed as a second surface facing the outer yoke, and
   at least a part of the second surface is exposed without being covered by the outer yoke.
(9) The interchangeable lens according to the (8), in which
   each of the outer yokes is provided with one or more facing portions facing the second surface, and
   two of the facing portions are positioned in a separated state in a direction orthogonal to an axial direction of the air core coil.
(10) The interchangeable lens according to any of the (1) to (3), in which
   each of the outer yokes is formed in an annular shape by a counter yoke and a bottom yoke, the counter yoke having the first mounting portion and the second mounting portion, the bottom yoke having parts each mounted on a corresponding one of the first mounting portion and the second mounting portion, and
   the air core coil, the drive magnets, and the inner yoke are positioned inside the outer yoke.
(11) An imaging device including:
   a fixed body fixed inside a device main body including an imaging element that converts a captured optical image into an electrical signal;
   a movable body including a holding frame that holds a lens, the movable body being moved with respect to the fixed body in a first direction and a second direction each orthogonal to an optical axis direction; and
   two actuators that each apply a moving force in a corresponding one of the first direction and the second direction,
   in which each of the actuators includes an air core coil mounted on the movable body, an outer yoke mounted on the fixed body, a pair of drive magnets, and an inner yoke on which the pair of drive magnets is mounted,
   each of the drive magnets includes a first pole portion and a second pole portion,
   the outer yoke is provided with a first mounting portion and a second mounting portion positioned in a state of facing each other,
   the pair of drive magnets and the inner yoke are positioned between the first mounting portion and the second mounting portion in a state where the pair of drive magnets and the inner yoke are inserted into the air core coil,
   in the pair of drive magnets, the first pole portions are respectively mounted on opposite surfaces of the inner yoke, and the second pole portions are each mounted on a corresponding one of the first mounting portion and the second mounting portion,
   an axial direction of the air core coil in an actuator that applies a moving force in the first direction coincides with the first direction, and
   an axial direction of the air core coil in an actuator that applies a moving force in the second direction coincides with the second direction.

### REFERENCE SIGNS LIST

- 100: imaging device
- 200: device main body
- 1: interchangeable lens
- 2: outer cylinder
- 6: fixed body
- 7: movable body
- 13: holding frame
- 14: lens
- 16: first mounting protrusion
- 17: second mounting protrusion
- 28: first actuator
- 29: second actuator
- 30: drive magnet
- 30a: first pole portion
- 30b: second pole portion
- 31: inner yoke
- 32: outer yoke
- 33: air core coil
- 33a: long portion
- 33b: short portion
- 35: bottom yoke
- 36: counter yoke
- 38: first mounting portion
- 38a: cutout portion
- 39: second mounting portion
- 40: magnetic plate
- 41: sphere
- 42: position detecting sensor
- 50: actuator
- 30c: first surface
- 30d: second surface
- 51: outer yoke
- 52: bottom yoke
- 53: counter yoke
- 55: first facing portion
- 56: second facing portion
- 58: first mounting portion
- 58a: cutout portion
- 59: second mounting portion
- 98: imaging element

## Claims

1. An interchangeable lens, comprising:
a fixed body fixed inside an outer cylinder;
a movable body including a holding frame that holds a lens, the movable body being moved with respect to the fixed body in a first direction and a second direction each orthogonal to an optical axis direction; and
two actuators that each apply a moving force in a corresponding one of the first direction and the second direction,
wherein each of the actuators includes an air core coil mounted on the movable body, an outer yoke mounted on the fixed body, a pair of drive magnets, and an inner yoke on which the pair of drive magnets is mounted,
each of the drive magnets includes a first pole portion and a second pole portion,
the outer yoke is provided with a first mounting portion and a second mounting portion positioned in a state of facing each other,
the pair of drive magnets and the inner yoke are positioned between the first mounting portion and the second mounting portion in a state where the pair of drive magnets and the inner yoke are inserted into the air core coil,
in the pair of drive magnets, the first pole portions are respectively mounted on opposite surfaces of the inner yoke, and the second pole portions are each mounted on a corresponding one of the first mounting portion and the second mounting portion,
an axial direction of the air core coil in an actuator that applies a moving force in the first direction coincides with the first direction, and
an axial direction of the air core coil in an actuator that applies a moving force in the second direction coincides with the second direction.

2. The interchangeable lens according to claim 1, wherein
the holding frame is provided with a first mounting protrusion and a second mounting protrusion on each of which the air core coil is mounted,
each of the first mounting portion and the second mounting portion includes a cutout portion, and
each of the first mounting protrusion and the second mounting protrusion is inserted into a corresponding one of the cutout portions.

3. The interchangeable lens according to claim 2, wherein
between each of the cutout portions and a corresponding one of the air core coils, a position detecting sensor is positioned, the position detecting sensor detecting a moving position of the movable body based on a change in a magnetic flux generated from the drive magnets.

4. The interchangeable lens according to claim 1, wherein
one of the actuators and another of the actuators are respectively provided as a first actuator and a second actuator,
a maximum moving distance of the movable body moved by a driving force of the first actuator is defined as a first moving distance, and a maximum moving distance of the movable body moved by a driving force of the second actuator is defined as a second moving distance,
in a direction orthogonal to both a direction in which the first pole portions and the second pole portions are aligned and an optical axis direction, an interval between one surface of the drive magnets and the air core coil and an interval between another surface of the drive magnets and the air core coil are each defined as an allowable interval, and
a sum of the allowable intervals in the first actuator is made larger than the second moving distance, and a sum of the allowable intervals in the second actuator is made larger than the first moving distance.

5. The interchangeable lens according to claim 1, wherein
a plurality of spheres are arranged between the fixed body and the movable body,
the movable body is made movable with respect to the fixed body by rolling of the spheres,
one or more magnetic plates are attached to each of the air core coils, and
each of the magnetic plates is attracted by the drive magnets to urge the movable body in a direction in which the movable body approaches the fixed body in the optical axis direction.

6. The interchangeable lens according to claim 5, wherein
each of the air core coil is formed in a rectangular tubular shape and includes a pair of long portions and a pair of short portions, and
the magnetic plates are attached to opposite end portions in a longitudinal direction of the long portion.

7. The interchangeable lens according to claim 1, wherein
each of the outer yokes is formed in an annular shape by a bottom yoke and a counter yoke, the bottom yoke having the first mounting portion and the second mounting portion, the counter yoke having parts each mounted on a corresponding one of the first mounting portion and the second mounting portion, and
the air core coil, the drive magnets, and the inner yoke are positioned inside the outer yoke.

8. The interchangeable lens according to claim 1, wherein
a surface, mounted on the inner yoke, of each of the drive magnets is formed as a first surface,
a surface, opposite to the first surface, of each of the drive magnets is formed as a second surface facing the outer yoke, and
at least a part of the second surface is exposed without being covered by the outer yoke.

9. The interchangeable lens according to claim 8, wherein
each of the outer yokes is provided with one or more facing portions facing the second surface, and
two of the facing portions are positioned in a separated state in a direction orthogonal to an axial direction of the air core coil.

10. The interchangeable lens according to claim 1, wherein
each of the outer yokes is formed in an annular shape by a counter yoke and a bottom yoke, the counter yoke having the first mounting portion and the second mounting portion, the bottom yoke having parts each mounted on a corresponding one of the first mounting portion and the second mounting portion, and
the air core coil, the drive magnets, and the inner yoke are positioned inside the outer yoke.

11. An imaging device comprising:
a fixed body fixed inside a device main body including an imaging element that converts a captured optical image into an electrical signal;
a movable body including a holding frame that holds a lens, the movable body being moved with respect to the fixed body in a first direction and a second direction each orthogonal to an optical axis direction; and
two actuators that each apply a moving force in a corresponding one of the first direction and the second direction,
wherein each of the actuators includes an air core coil mounted on the movable body, an outer yoke mounted on the fixed body, a pair of drive magnets, and an inner yoke on which the pair of drive magnets is mounted,
each of the drive magnets includes a first pole portion and a second pole portion,
the outer yoke is provided with a first mounting portion and a second mounting portion positioned in a state of facing each other,
the pair of drive magnets and the inner yoke are positioned between the first mounting portion and the second mounting portion in a state where the pair of drive magnets and the inner yoke are inserted into the air core coil,
in the pair of drive magnets, the first pole portions are respectively mounted on opposite surfaces of the inner yoke, and the second pole portions are each mounted on a corresponding one of the first mounting portion and the second mounting portion,
an axial direction of the air core coil in an actuator that applies a moving force in the first direction coincides with the first direction, and
an axial direction of the air core coil in an actuator that applies a moving force in the second direction coincides with the second direction.
